(19) **Europäisches Patentamt / European Patent Office / Office européen des brevets**

(11) **EP 4 412 114 A2**

(12) **EUROPEAN PATENT APPLICATION**

(43) Date of publication:
07.08.2024  Bulletin 2024/32

(21) Application number: 23220750.6

(22) Date of filing: 29.12.2023

(51) International Patent Classification (IPC):
*H04J 11/00* (2006.01)  *H04L 27/26* (2006.01)
*H04W 74/0808* (2024.01)

(52) Cooperative Patent Classification (CPC):
**H04J 11/0023; H04J 11/0066; H04L 27/2656;**
H04J 2011/0096; H04W 74/0808

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  10.01.2023  KR 20230003318

(71) Applicant: Samsung Electronics Co., Ltd.
Suwon-si, Gyeonggi-do 16677 (KR)

(72) Inventors:
• SON, Youngwook
16677 Suwon-si, Gyeonggi-do (KR)
• KIM, Hyeonjun
16677 Suwon-si, Gyeonggi-do (KR)
• LEE, Jungwoon
16677 Suwon-si, Gyeonggi-do (KR)
• JEON, Hyunbae
16677 Suwon-si, Gyeonggi-do (KR)

(74) Representative: Kuhnen & Wacker
Patent- und Rechtsanwaltsbüro PartG mbB
Prinz-Ludwig-Straße 40A
85354 Freising (DE)

(54) **WIRELESS COMMUNICATION DEVICE, WIRELESS COMMUNICATION SYSTEM INCLUDING THE SAME, AND METHOD OF OPERATING THE SAME**

(57)     A method of operating a wireless communication device includes detecting (S210) a first signal based on an auto correlation function value of each of a plurality of sub-bands, determining (S220) whether the first signal is an interference signal, the interference signal not being in a primary channel, aborting (S230) a first synchronization for the first signal in response to determining the first signal is the interference signal, adjusting (S240) a bandwidth to exclude a first sub-band among the plurality of sub-bands, the first sub-band corresponding to the interference signal to obtain an adjusted bandwidth, and performing (S250) a second synchronization according to the adjusted bandwidth.

```
┌─────────────────────────────────────┐
│  Detect secondary signal from ACF of │──S210
│         each of sub-bands            │
└─────────────────────────────────────┘
                   ↓
┌─────────────────────────────────────┐
│  Determine whether there is error    │──S220
│    detection due to interference     │
└─────────────────────────────────────┘
                   ↓
┌─────────────────────────────────────┐
│  Abort synchronization on interfering│──S230
│              signals                 │
└─────────────────────────────────────┘
                   ↓
┌─────────────────────────────────────┐
│  Set bandwidth reduction and recovery│──S240
│      timer for signal detection      │
└─────────────────────────────────────┘
                   ↓
┌─────────────────────────────────────┐
│      Resume signal detection and     │──S250
│            synchronization           │
└─────────────────────────────────────┘
```

**FIG. 9**

EP 4 412 114 A2

**Description**

BACKGROUND

Example embodiments of the present disclosure relate to a wireless communication device, a wireless communication system including the same, and a method of operating the same.

Generally, a Wireless Local Area Network (WLAN) may be used to wirelessly connect two or more devices to each other. The WLAN is based on the Institute of Electrical and Electronics Engineers (IEEE) 802.11 standard, which has evolved into 802.11b, 802.11a, 802.11g, 802.11n, 802.11ac, and 802.11ax. Currently, transmission rates of up to 1 Gbit/s are supported using Orthogonal Frequency-Division Multiplexing (OFDM). In 802.11ac, data is be transmitted simultaneously (or contemporaneously) to multiple users through a Multi-User Multi-Input Multi-Output (MU-MIMO) technique. In 802.1 1ax, also known as High Efficiency (HE), available subcarriers are divided and provided to users by applying MU-MIMO and Orthogonal Frequency-Division Multiple Access (OFDMA) technology, enabling multiple access to be implemented. Thus, a WLAN system that incorporates 802.11ax may effectively support communication in densely populated areas and outdoors.

SUMMARY

Example embodiments of the present disclosure provide a wireless communication device which may reduce the effect of interference signals, a wireless communication system including the same, and a method of operating the same.

According to example embodiments of the present disclosure, a method of operating a wireless communication device includes detecting a first signal based on an auto correlation function value of each of a plurality of sub-bands, determining whether the first signal is an interference signal, the interference signal not being in a primary channel, aborting a first synchronization for the first signal in response to determining the first signal is the interference signal, adjusting a bandwidth to exclude a first sub-band among the plurality of sub-bands, the first sub-band corresponding to the interference signal to obtain an adjusted bandwidth, and performing a second synchronization according to the adjusted bandwidth.

According to example embodiments of the present disclosure, a wireless communication device includes a transceiver configured to receive a first radio signal from an antenna, or output a second radio signal to the antenna, and processing circuitry configured to divide a first signal received in a band channel into a plurality of sub-bands, perform a first synchronization using an auto correlation function (ACF) value for each of the plurality of sub-bands, determine whether a second signal detected in a first sub-band among the plurality of sub-bands is an interference signal to obtain a determination result, and determine whether to perform a second synchronization or to abort a process of receiving the second signal according to the determination result.

According to example embodiments of the present disclosure, a wireless communication system includes a transmitter configured to output a signal of a wideband channel, a receiver configured to receive an input signal output from the transmitter, and an interferer configured to output an interference signal to the receiver, wherein the receiver is configured to detect the interference signal output from the interferer, dynamically adjust a bandwidth to exclude a sub-band corresponding to the interference signal, and receive and synchronize the input signal in the adjusted bandwidth.

According to example embodiments of the present disclosure, a method of operating a wireless communication device includes determining whether a first auto correlation function (ACF) value corresponding to a first training sequence for an input signal is greater than a first threshold, determining whether a sum of ACF values is greater than a second threshold in response to determining the first ACF value is not greater than the first threshold, the ACF values respectively corresponding to a plurality of training sequences for the input signal, and the first training sequence being included among the plurality of training sequences, determining whether a detection signal is a signal of a primary channel in response to determining the first ACF value is greater than the first threshold, determining whether an ACF value of the primary channel is greater than a third threshold in response to determining the detection signal is not the signal of the primary channel, or the sum of the ACF values is greater than the second threshold, and aborting a process of receiving a signal of a sub-band corresponding to the first training sequence when the ACF value of the primary channel is not greater than the third threshold.

BRIEF DESCRIPTION OF DRAWINGS

The above and other aspects, features, and advantages of the present disclosure will be more clearly understood from the following detailed description, taken in combination with the accompanying drawings, in which:

FIG. 1 is a diagram illustrating a WLAN system according to example embodiments of the present disclosure;

FIG. 2 is a diagram illustrating a wireless communication device transmitting/receiving a physical layer convergence protocol (PLCP) protocol data unit (PPDU) according to example embodiments of the present disclosure;

FIG. 3 is a diagram illustrating a wireless communication device according to example embodiments of the present disclosure;

FIG. 4 is a diagram illustrating operations of a wireless communication device according to example embodiments of the present disclosure;

FIG. 5 is a diagram illustrating an ACF output according to accumulated samples in a wireless communication device according to example embodiments of the present disclosure;

FIG. 6 is a diagram illustrating an ACF level when an interference signal enters an auxiliary channel in a wireless communication device according to example embodiments of the present disclosure;

FIG. 7 is a diagram illustrating an ACF level when a training sequence of a valid frame which is not interference is received in a wireless communication device according to example embodiments of the present disclosure;

FIG. 8 is a flowchart illustrating operations of a wireless communication device according to example embodiments of the present disclosure;

FIG. 9 is a flowchart illustrating operations of a wireless communication device according to example embodiments of the present disclosure;

FIG. 10 is a diagram illustrating example embodiments in which a valid signal coming through a primary channel is correctly received;

FIGS. 11A and 11B are diagrams illustrating an example in which a valid frame entering a primary channel is received in a circumstance in which an interference signal overlaps a secondary channel;

FIGS. 12A and 12B are diagrams illustrating comparison of performance in example embodiments in an additive white Gaussian noise (AWGN) channel;

FIGS. 13A and 13B are diagrams illustrating comparison of performance between a general method and a method of example embodiments in a fading channel;

FIG. 14A is a diagram illustrating comparison of PER performance of example embodiments with respect to a received signal entirely occupying a 320 MHz wideband channel in an additive white Gaussian noise (AWGN) channel;

FIG. 14B is a diagram illustrating comparison of PER performance of example embodiments with respect to a received signal entirely occupying a 160 MHz wideband channel in an AWGN channel;

FIG. 15A is a diagram illustrating comparison of PER performance of example embodiments with respect to a received signal entirely occupying a 320 MHz wideband channel in a fading channel;

FIG. 15B is a diagram illustrating comparison of PER performance of example embodiments with respect to a received signal entirely occupying a 160 MHz wideband channel in a fading channel;

FIG. 16 is a ladder diagram illustrating operations of a wireless communication system according to example embodiments of the present disclosure; and

FIG. 17 is a diagram illustrating a mobile device according to example embodiments of the present disclosure.

## DETAILED DESCRIPTION

Hereinafter, example embodiments of the present disclosure will be described as below with reference to the accompanying drawings.

Generally, with the development and expansion of a wireless local area network (WLAN) communication standard, a technique using a gradually wider frequency bandwidth has been implemented. The next-generation IEEE 802.11 standard defines operation in wideband channels above 320 MHz, which may correspond to combining 16 or more 20 MHz sub-bands, which are basic units of WLAN channels. Accordingly, in terms of a wireless terminal, an element technology for maximizing (or improving) communication performance by effectively managing and operating a large number of sub-bands included in a wideband channel may be provided according to example embodiments.

A transmission bandwidth of a general frame (or a packet) in a WLAN operating based on a wideband channel may include a main 20 MHz sub-band (or a primary channel). Also, by combining a plurality of 20 MHz sub-bands (or auxiliary channels (secondary channels)), the total bandwidth may become a multiple of 20 MHz units. In an environment in which networks including different access points (APs) coexist, primary channels for each network may be present independently within the same broadband channel (or similar broadcasting channels). Accordingly, communication performances of wireless terminals may interfere with each other by forming transmission signals occupying respective sub-bands.

Generally, the initial detection of a reception frame and a synchronization method in a terminal may include processing a signal across a wideband channel as is or processing by splitting (band-splitting) in units of sub-bands, and combining the processed information such that signals of the entirety of bands of channels may be comprehensively used. In terms of receiver sensitivity performance, the method may have an effect of amplifying signal strength (combining gain) and a diversity gain when frequency band characteristics of each sub-band are different. However, since signals are detected for the entirety of bands within the channel and synchronization is attempted, when the interference signal is present alone on the auxiliary channel (secondary channel), false detection may occur, such that unnecessary (or excessive) synchronization may be performed, which may eventually cause a circumstance in which a correct reception opportunity is lost in the primary channel.

A wireless communication device, a wireless communication system including the same, and a method of operating the same are provided in example embodiments which dynamically adjust a combination of sub-bands used for detection and synchronization of a received signal, thereby reducing false detection of an interference signal of an auxiliary channel and reducing unnecessary (or excessive) synchronization.

A method of operating a wireless communication device according to example embodiments may split a broadband channel into sub-band units of 20 MHz, may perform frame detection and synchronization on the split sub-band, may detect the presence of a signal received in a specific sub-band, and may determine whether the detected received signal includes a primary 20MHz sub-band (or primary channel) or false detection by an interference signal. Here, when the detected signal is determined to be interference, the method of operating the wireless communication device according to example embodiments may abort (or skip, cancel, block, etc.) the synchronization process for the corresponding signal, and may exclude the corresponding sub-band for a predetermined (or alternatively, given) period of time in the subsequent frame detection and synchronization process. In example embodiments, there may be a criterion for determining whether a detected signal is a false detection due to interference. In example embodiments, when the false detection determination is wrong, by swiftly recovering to the present operation, loss may be reduced.

The wireless communication device, the wireless communication system including the same, and the method of operating the same may provide improved performance in terms of receiver sensitivity and synchronization by reducing the influence of an interference signal. Also, the wireless communication device, the wireless communication system including the same, and the method of operating the same may provide the improved reception performance for a signal occupying a wide bandwidth through a dynamic combination of sub-bands in a broadband channel.

Also, the wireless communication device, the wireless communication system including the same, and the method of operating the same may reduce unnecessary (or excessive) power loss of a terminal which may be caused by frequent false detection of an interference signal. That is, the wireless communication device, the wireless communication system including the same, and the method of operating the same may exclude an auxiliary channel in which interference is detected among sub-bands included in a broadband channel from the frame detection and synchronization process, the effect of the presence or absence of an interference signal may be reduced and a valid signal may be normally received in the primary channel. Even in a circumstance in which a received signal is not present in a primary channel, in example embodiments, a detailed synchronization procedure unnecessarily (or excessively) performed due to false detection of an interference signal may be prevented (or reduced) in advance, which may contribute to reducing the power consumption of the terminal.

In example embodiments, a reception frame detection and synchronization technique considering the influence of an interference signal in a wideband channel may be suggested. The wireless communication device, the wireless communication system including the same, and the method of operating the same in example embodiments may dynamically adjust the target bandwidth to reduce the effect of false detection of an interference signal present in a sub-band in a wideband channel during the signal initial detection and synchronization process.

The wireless communication device, the wireless communication system including the same, and the method of operating the same in example embodiments may reduce the influence of an interference signal present in a secondary band within a wideband channel in an initial frame detection and synchronization operation. The wireless communication device, the wireless communication system including the same, and the method of operating the same in example embodiments may normalize receiver sensitivity and synchronization performance of a terminal in a circumstance in which an interference signal is also present. The wireless communication device, the wireless communication system including the same, and the method of operating the same in example embodiments may preserve the same receiver sensitivity (or a similar receiver sensitivity) for a received signal occupying a wide bandwidth. The wireless communication device, the wireless communication system including the same, and the method of operating the same in example embodiments may reduce unnecessary (or excessive) power consumption caused by false detection of an interference signal. The wireless communication device, the wireless communication system including the same, and the method of operating the same in example embodiments may reduce damage caused by false detection of inter-network interference by a terminal in a dense WLAN environment, and may support transmission and reception based on a broadband channel.

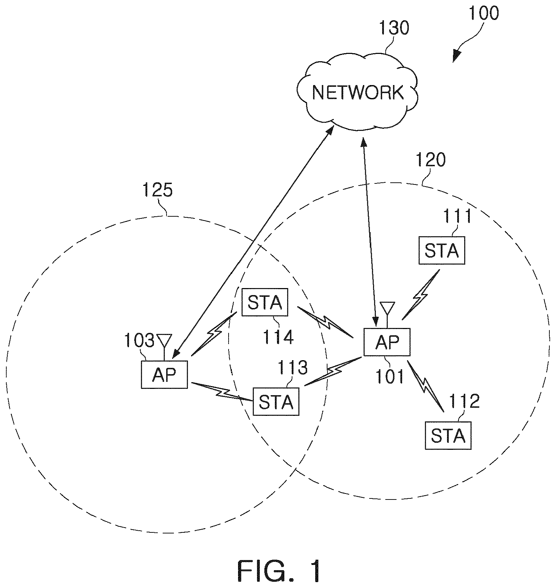

FIG. 1 is a diagram illustrating a WLAN system according to example embodiments. Referring to FIG. 1, a WLAN system 100 may include access points (APs) 101 and 103 (e.g., a first AP 101 and a second AP 103).

The APs 101 and 103 may communicate with at least one network 130, such as the Internet, internet protocol (IP) network, or another data network. Also, the APs 101 and 103 may provide wireless access to the network 130 for a plurality of stations (STAs) 111-114 (e.g., a first STA 111, a second STA 112, a third STA 113 and a fourth STA 114) within the coverage regions 120 and 125 of the APs 101 and 103. Also, the APs 101 and 103 may communicate with each other using wireless fidelity (Wi-Fi) or other WLAN communication techniques. Also, the APs 101 and 103 may communicate with a plurality of STAs 111-114 using wireless fidelity (Wi-Fi) or other WLAN communication techniques.

Depending on the type of network, the generally used terms such as "router" and/or "gateway" may be used instead of "AP" or "access point." Also, in a WLAN, an AP may be provided for a radio channel. Also, an AP may refer to a STA. Also, depending on the type of network, "STA" or "station" may be used instead of "mobile station," "subscriber station," "remote terminal," "user equipment," "wireless terminal," "user device," and/or "user." For ease of description, the term "STA" in example embodiments may be used to denote a remote wireless device wirelessly accessing an AP or accesses a wireless channel within a WLAN. Although a STA is considered a mobile device (e.g., mobile phone or smartphone) in example embodiments, a STA may also be implemented as a fixed device (e.g., a desktop computer, application processor, media player, fixed sensor, television, or the like).

The dotted lines illustrated in FIG. 1 indicate approximate extents of the coverage regions 120 and 125. Here, each of the coverage regions 120 and 125 may have a circular shape for ease of description. However, the coverage regions 120 and 125 associated with the APs 101 and 103 may have different shapes reflecting various changes in a wireless environment related to natural or artificial obstructions, or may also have other shapes, including irregular ones depending on settings thereof.

The APs 101 and 103 may include a circuit or a program for managing Uplink multiuser (UL MU) or downlink multiuser (DL MU) transmission in a WLAN system. However, the WLAN system 100 illustrated in FIG. 1 may be merely an example. For example, the WLAN system 100 may include a predetermined (or alternatively, given) number of APs and a predetermined (or alternatively, given) number of STAs. The AP 101 may also communicate directly with the predetermined (or alternatively, given) number of STAs. Also, the AP 101 may provide wireless broadband access with the network 130 to the STAs 111-114. Similarly, each of the APs 101 and 103 may communicate directly with the network 130 and may provide the network 130 with wireless broadband access to the STAs 111-114. Also, the APs 101 and 103 may implement connection with various external networks such as an external telephone network or a data network.

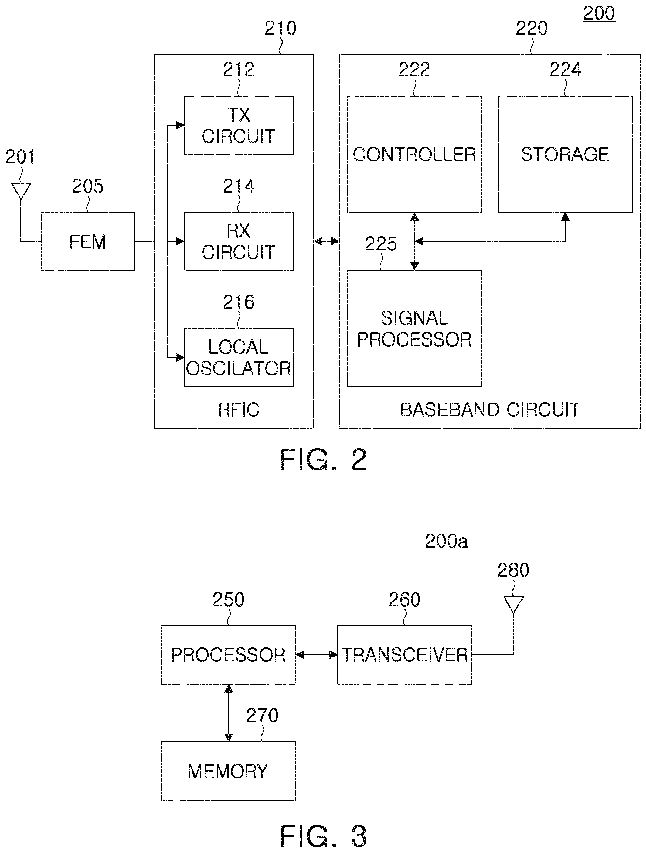

FIG. 2 is a diagram illustrating a wireless communication device transmitting/receiving a physical layer convergence protocol (PLCP) protocol data unit (PPDU) according to example embodiments. Referring to FIG. 2, the wireless communication device 200 may be included in a transmitting device (e.g., AP) or a receiver device (e.g., STA). That is, the wireless communication device in FIG. 2 may be included in one of the APs 101 and 103 and the STAs 111-114 illustrated in FIG. 1, and may be applied to, for example, a computer, a smartphone, a portable electronic device, a tablet, a wearable device, a sensor used in the Internet of Things (IoT), and the like.

The wireless communication device 200 may include an antenna 201, a front-end module 205 (FEM), a radio frequency integrated circuit 210 (RFIC), and/or a baseband circuit 220. The front-end module 205 and the RFIC 210 may be implemented on a single chip as an integrated single component. In this case, a function of the front-end module 205 and a function of the RFIC 210 may be implemented together in a chip. For ease of description, in example embodiments of the present disclosure, the front-end module 205 and the RFIC 210 may be present as separate components.

The antenna 201 may be connected to the front-end module 205, and may transmit a signal provided from the front-end module 205 to another wireless communication device (terminal or base station) or may provide signals received from other wireless communication devices to the front-end module 205. Also, the front-end module 205 may be connected to the antenna 201 and may separate a transmission frequency from a reception frequency. That is, the front-end module 205 may separate the signal received from the RFIC 210 for each frequency band and may provide the signals to the corresponding antenna 201. Also, the front-end module 205 may provide the signal received from the antenna 201 to the RFIC 210.

Also, the antenna 201 may transmit a signal frequency-separated by the front-end module 205 to an external entity or may provide a signal received from an external entity to the front-end module 205. The antenna 201 may include, for example, an array antenna, but example embodiments are not limited thereto. Also, at least one antenna 201 may be implemented. Accordingly, in example embodiments, the wireless communication device 200 may support phased array, multiple-input and multiple-output (MIMO) using the plurality of antennas. One antenna may be provided in FIG. 2, but the number of antennas in example embodiments is not limited thereto. The front-end module 205 may include an antenna tuner. Here, the antenna tuner may be connected to the antenna 201 and may adjust impedance of the connected antenna 201.

The RFIC 210 may generate an RF signal by performing frequency up-conversion on a baseband signal) provided from the baseband circuit 220. Also, the RFIC 210 may generate a baseband signal by performing frequency down-conversion on the RF signal provided from the front-end module 205. In example embodiments, the RFIC 210 may include a transmit (TX) circuit 212 for frequency up-conversion, a receiver (RX) circuit 214 for frequency down-conversion, and/or a local oscillator 216.

The transmission circuit 212 may include a first analog baseband filter, a first mixer, and/or a power amplifier. The first analog baseband filter may filter the baseband signal received from the baseband circuit 220 and may provide the filtered baseband signal to the first mixer. The first mixer may perform frequency up-conversion of converting a frequency of the baseband signal from the baseband to a high frequency band through a frequency signal provided by the local oscillator 216. Through this frequency up-conversion, the baseband signal may be provided to the power amplifier as an RF signal. The power amplifier may amplify power of the RF signal and may provide power to the front-end module 205.

The receiver circuit 214 may include a second analog baseband filter, a second mixer, and/or a low-noise amplifier. The second analog baseband filter may filter the baseband signal and may provide the filtered baseband signal to the baseband circuit 220. The second mixer may perform frequency down-conversion of converting a frequency of the RF signal from a high frequency band to a baseband through a frequency signal provided by the local oscillator 216. Through the frequency down-conversion, the RF signal may be provided to the second analog baseband filter as a baseband signal. The low-noise amplifier may amplify the RF signal provided from the front-end module 205 and may provide the amplified RF signal to the second mixer.

The baseband circuit 220 may receive and process a baseband signal from the RFIC 210, or may generate a baseband signal and may provide the baseband signal to the RFIC 210. Also, the baseband circuit 220 may include a controller 222, a storage unit 224, and/or a signal processing unit 225.

The controller 222 may control overall operations of the baseband circuit 220 as well as those of the RFIC 210. Also, the controller 222 may write data to or may read data from the storage unit 224. To this end, the controller 222 may include at least one processor, a microprocessor, or a microcontroller, or may be a portion of a processor. In example embodiments, the controller 222 may include, for example, a central processing unit (CPU), a digital signal processor (DSP), and the like.

The storage unit 224 may store data such as a basic program, an application program, and setting information for operation of the wireless communication device 200. For example, the storage unit 224 may store instructions and/or data related to the controller 222, the signal processing unit 225, and/or the RFIC 210. Also, the storage unit 224 may store trigger frame format, PPDU format, and/or resource unit (RU) allocation information. Also, the storage unit 224 may include various storage media. That is, the storage unit 224 may include a volatile memory, a nonvolatile memory, or a combination of a volatile memory and a nonvolatile memory. For example, the storage unit 224 may include random access memory (RAM) (dynamic RAM (DRAM), phase-change RAM (PRAM), magneto-resistive RAM (MRAM), static RAM (SRAM), or the like), and/or flash memory (NAND flash memory, NOR flash memory, or ONE NAND flash memory). Also, the storage unit 224 may store various processor-executable instructions. The processor-executable instructions may be executed by the controller 222.

The signal processing unit 225 may process a baseband signal provided from the RFIC 210 and may process a baseband signal to be provided to the RFIC 210. For example, the signal processing unit 225 may generate a PPDU using information stored in the storage unit 224 or may decode the PPDU received from the external wireless communication device through the antenna 201, FEM 205, and RFIC 210.

In example embodiments, the signal processing unit 225 may include a demodulator, Rxfilter & cell searcher, and others. The demodulator may include a channel estimator, data deallocation unit, interference whitener, symbol detector, channel state information generator (CSI generator), mobility measurement unit, automatic gain control unit, an automatic frequency control unit, a symbol timing recovery unit, a delay spread estimation unit, a time correlator, and the like, and may also perform functions of each component. Here, the mobility measurement unit may be configured to measure signal quality of a serving cell and/or a neighbor cell to support mobility, and may measure a received signal strength indicator (RSSI), reference signal received power (RSRP), reference signal received quality (RSRQ), a reference signal (RS)-signal-to-interference & noise ratio (SINR), and the like.

The demodulator may include a plurality of sub-demodulators independently or jointly performing the above functions for each de-spread signal or each frequency band signal in the communication system.

The Rxfilter & cell searcher may include a Rxfilter, a cell searcher, a fast Fourier transform (FFT) unit, a time duplex-automatic gain control (TD-AGC) unit, a time duplex-automatic frequency control (TD-AFC) unit, or the like. Here, the Rxfilter (also referred to as Rx front end) may perform operations such as sampling, interference cancellation, and amplification on the baseband signal received from the RFIC 210. The cell searcher may include a primary synchronization signal (PSS) detector, a secondary synchronization signal (SSS) detector, and the like, and may measure amplitude and quality of signals from neighboring cells.

The others may include a symbol processor, a channel decoder, and the components in a transmitting path. Here, the symbol processor may perform channel-deinterleaving, demultiplexing, rate-matching, and the like, such that the demodulated signal may be decoded for each channel. Also, the channel decoder may decode the demodulated signal in units of code blocks. Also, the symbol processor and the channel decoder may include a hybrid automatic repeat request (HARQ) processing unit, a turbo decoder, a CRC checker, a Viterbi decoder, and/or a turbo encoder.

The other components in a transmitting path may include a transmit first-in-first-out (TXFIFO), an encoder, a scrambler, an interleaver, a constellation mapper, an inversed discrete Fourier transformer (IDFT), a guard interval and a windowing insertion module, and the like.

The baseband circuit 220 includes a controller 222, a storage unit 224, and a signal processing unit 225 in FIG. 2, but in the baseband circuit 220, two or more of the controller 222, storage unit 224, and signal processing unit 225 may be integrated and may be present in a single unit. Also, the baseband circuit 220 may further include additional components other than the above-described components or may not include a portion of components. Furthermore, the signal processing unit 225 may further include additional components other than the above-described components or may not include a portion of components. In example embodiments, the controller 222, the storage unit 224, and the signal processing unit 225 may be included in a device. In example embodiments, the controller 222, the storage unit 224, and the signal processing unit 225 may be distributed and included in different devices (e.g., a distributed architecture). Also, the RFIC 210 and the baseband circuit 220 may include components known to those skilled in the art. Also, the corresponding portions may be implemented in a manner known to those skilled in the art, and may be implemented using hardware, firmware, software logic, or a combination thereof.

The wireless communication device 200 according to example embodiments may reduce an influence of an interference signal present in a secondary band within a wideband channel in an initial frame detection and synchronization operation. The wireless communication device 200 in example embodiments may normalize receiver sensitivity and synchronization performance of a terminal in a circumstance in which interference signals coexist, may preserve the same receiver sensitivity as (or a similar receiver sensitivity to) before for a received signal occupying a wide bandwidth, and may reduce unnecessary (or excessive) power consumption caused by false detection of an interference signal. Accordingly, the wireless communication device in example embodiments may reduce damage caused by false detection of interference between networks in a dense WLAN environment and may effectively support wideband channel-based transmission and reception.

FIG. 2 merely illustrates an example of a wireless communication device, and example embodiments thereof are not limited thereto. That is, various changes (addition or deletion of components) may be made in FIG. 2.

FIG. 3 is a diagram illustrating a wireless communication device 200a according to example embodiments. Referring to FIG. 3, an example in which the configuration of the wireless communication device 200 in FIG. 2 is partially changed is illustrated. In example embodiments, the wireless communication device 200a may include a processor 250, a transceiver 260, a memory device 270, and/or an antenna 280.

The processor 250 may be implemented to control overall operations of the transceiver 260. In example embodiments, the processor 250 may write data to or read data from the memory device 270. In example embodiments, the processor 250 may include the functions of the controller 222 in FIG. 2. The processor 250 may execute a frame detection algorithm.

The transceiver 260 may be implemented to transmit a radio signal to and receive a radio signal from an external device. The transceiver 260 may be controlled by the processor 250. That is, the transceiver 260 may include, for example, functions of the front-end module 205, the RFIC 210, and the signal processing unit 225 in FIG. 2. Accordingly, when the wireless communication device 200a is included in the transmission device (when the wireless communication device 200 performs a transmission function), the transceiver 260 may generate a physical layer convergence protocol (PLCP) protocol data unit (PPDU) including a preamble and a payload, and may transmit the generated PPDU to a receiver device. When the wireless communication device 200a is included in the receiver device (when the wireless communication device 200a performs a receiving function), the transceiver 260 may receive a PPDU including a preamble and a payload from a transmitter. Also, the transceiver 260 may decode the payload based on the preamble of the received PPDU. That is, the transceiver 260 may decode the preamble of the PPDU through an internal decoder (e.g., the decoder of the signal processing unit 225 in FIG. 2) and may decode the payload of the PPDU based on the decoding result.

The memory device 270 may be implemented to store data such as basic programs, application programs, and setting information for operation of the wireless communication device 200. Accordingly, the memory device 270 may store instructions and/or data related to the processor 250 and the transceiver 260. That is, the memory device 270 may include, for example, a function of the storage unit 224 in FIG. 2.

Also, the memory device 270 may store a frame detection algorithm. Here, the frame detection algorithm may divide the signal received in the band channel into a plurality of sub-band units, may perform detection and synchronization using the auto correlation function (ACF) value for each sub-band, may determine, when an initial signal is detected in an arbitrary band within a channel, whether the initial signal is an interference signal, and determine whether to perform a detailed synchronization and reception process or to abort a process of receiving the initial signal depending on the determination result.

In example embodiments, the frame detection algorithm may reduce false detection of an interference signal to reduce power consumption. In example embodiments, when an interference signal is detected on auxiliary channels, the frame detection algorithm may exclude a sub-band corresponding to the interference signal from the bandwidth for a predetermined (or alternatively, given) period of time, and may resume the frame detection and synchronization process. In example embodiments, the frame detection algorithm (implemented by the processor 250) may determine a recovery timer corresponding to a predetermined (or alternatively, given) period of time. According to example embodiments, the processor 250 may set the recovery timer to the predetermined (or alternatively, given) period of time, and initiate the recovery timer. In example embodiments, the frame detection algorithm (implemented by the processor 250) may restore the bandwidth to use the entire bandwidth of the channel in a synchronization process when a signal is detected in the primary channel within a predetermined (or alternatively, given) period of time immediately (or promptly) after reducing the bandwidth.

The antenna 280 may be connected to the transceiver 260, may transmit a signal provided from the transceiver 260 to another wireless communication device (terminal or base station), or may provide a signal received from another wireless communication device to the transceiver 260. That is, the antenna 280 may include, for example, a function of the antenna 201 in FIG. 2.

The wireless communication device 200a according to example embodiments may divide a signal received in a band channel into several sub-band units, may perform detection and synchronization using an auto correlation function (ACF), may further determine, when a signal is detected in a band within the channel, whether the signal is interference, and may determine whether to perform a detailed synchronization and reception process later or to immediately (or promptly) abort the reception process for the corresponding signal depending on the determination result.

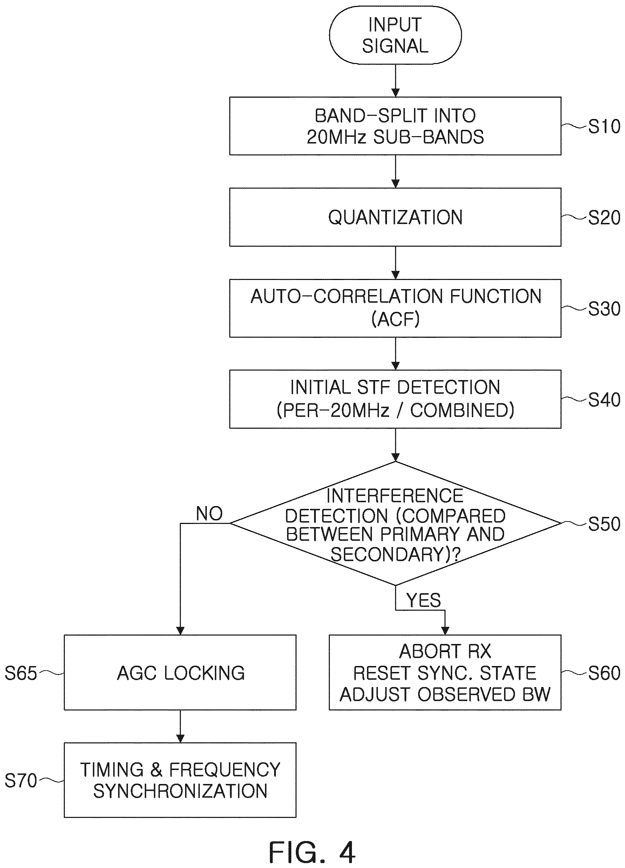

FIG. 4 is a diagram illustrating operations of a wireless communication device according to example embodiments. Referring to FIG. 4, a reception operation of the wireless communication device 200 may be performed as below.

The received signal may be split into 20 MHz sub-band units through filtering in the time domain (S10). Thereafter, the splitting signal may be quantized to a predetermined (or alternatively, given) level to reduce computational complexity (S20). ACF calculation may be performed according to an appropriate delay time of the training sequence structure using the quantized received samples (S30). Based on the sequentially calculated ACF value (e.g., a respective ACF value) for each sub-band or the ACF summed value throughout the entire band of the channel (e.g., summed across all of the sub-bands), an initial short training field (STF) detection process for determining whether a WLAN received signal is present may be performed (S40).

The method according to example embodiments may further include determining whether the corresponding signal is interference or corresponds to a training sequence of a valid frame (S50). As a result of interference detection determination, when the corresponding signal is not interference, the initial signal may be automatic gain control (AGC) locked in response to detection (S65). When it is determined that the corresponding signal is interference, the receiving process may be immediately (or promptly) aborted and the detection and synchronization process may be initialized (S60). That is, the bandwidth of the sub-band affected by interference may be dynamically adjusted in a direction in which the sub-band is excluded for a predetermined (or alternatively, given) period of time from a new signal detection procedure subsequently resumed. Detailed synchronization (e.g., timing and frequency synchronization) may be performed after setting the AGC (S70).

Generally, a wireless communication device may detect and synchronize the beginning of a frame transmission signal for correct reception operation. The preamble of a typical OFDM frame may consist of a training sequence in which a constant-length sample array is periodically repeated in the time domain. When the auto-correlation function (ACF) corresponding to a delay equal (or similar) to the sample repetition period of the training sequence is calculated for an initial signal input of a valid reception frame, the result may increase higher than the threshold as compared to the example in which only white noise is present such that, the presence or absence of a received signal may be detected.

For an input signal having undergone quantization after splitting a wideband channel into sub-band units with a width of 20 MHz, when a value corresponding to the $n$-th time sample of the $m$-th sub-band is $\bar{x}(n, m)^{\bar{x}(n, m)}$, ACF $A_{20MHz}(n, m)$ of a constant delay $\delta$ calculated using may be as in the equation below.

[Equation 1]

$$A_{20\mathrm{MHz}}(n, m) = \sum_{i=0}^{N} \bar{x}(n - i, m)\bar{x}^*(n - i - \delta, m)$$

Here, N refers to a buffer (window) length of accumulated samples for which ACF is calculated.

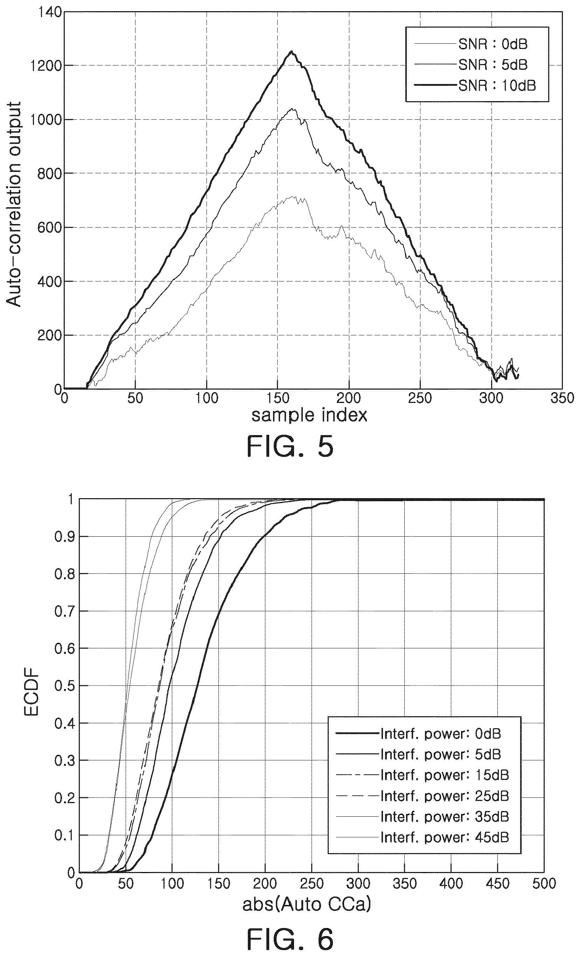

FIG. 5 is a diagram illustrating an ACF output according to accumulated samples in a wireless communication device according to example embodiments.

An absolute value of the ACF output may have a slight magnitude in an environment in which only white noise is present, whereas magnitude of the absolute value may increase to a high level as illustrated in FIG. 5 when a valid training sequence signal having a period corresponding to actual $\delta$ is received. Therefore, the presence or absence of a valid received signal may be detected by applying a condition in which the magnitude exceeds a predetermined (or alternatively, given) threshold. Appropriate thresholds may be applied to the ACF of individual sub-bands or to the sum of ACFs for the entirety of sub-band $m$ in the wideband channel, respectively, and may be used for signal detection.

[Equation 2]

$$|A_{20\text{MHz}}(n, m)| > THRESHOLD_{20\text{MHz}}$$

$$A_{\text{WB}}(n) = \left|\sum_{m} A_{20\text{MHz}}(n, m)\right| > THRESHOLD_{\text{WB}}$$

A method of receiving a signal of a wireless communication device according to example embodiments may reduce the effect of the presence or absence of an interference signal by excluding an auxiliary channel in which interference is detected among sub-bands included in a broadband channel in frame detection and synchronization process, and may receive a valid signal in the primary channel normally. Even in a circumstance there is no received signal in the primary channel, the method of receiving a signal in example embodiments may prevent (or reduce) unnecessary (or excessively performed) detailed synchronization procedures due to false detection of interference signals in advance and may reduce power consumption of a terminal accordingly. The method of receiving a signal in example embodiments may include dynamically adjusting a combination of sub-bands used based on whether interference is detected, such that when a valid received signal has a wide frequency bandwidth including both the primary channel and the auxiliary channel, performance gain in terms of receiver sensitivity may be preserved. The above-described method of receiving a signal of the wireless communication device may be applied to WLAN products and may be applied to standards such as IEEE P802.11ac, IEEE P802.11ax, and/or IEEE P802.11be.

Generally, when there is a frame occupying only a portion of sub-bands in a wideband channel, the size of ACF $A_{20\text{MHz}}(n, m)$ for each 20MHz may be different. An initial signal including a training sequence is detected in the corresponding sub-band, but the level of ACF generally may not exceed the threshold in the empty sub-band. When there is an interference signal of another network to which the signal does not belong, that is, a frame not including a primary channel, the terminal may observe an ACF level higher than the threshold in the corresponding auxiliary channel and may determine that a training sequence has been detected. However, the signal may not be a valid signal which should actually be received and may correspond to false detection due to interference. By recognizing the false detections and preventing (or reducing) synchronization against interference, correct initial signal detection and synchronization performance for an actual valid frame received in the primary channel may be guaranteed (or a likelihood thereof increased) afterwards.

FIG. 6 is a diagram illustrating an ACF level when an interference signal enters an auxiliary channel in a wireless communication device according to example embodiments.

When an interference signal enters an auxiliary channel, inter-band signal leakage and signal aliasing in the process of and sub-band splitting filtering may be present. Accordingly, the ACF level may slightly increase even in an empty primary channel. However, the level may remain relatively low as illustrated in FIG. 6.

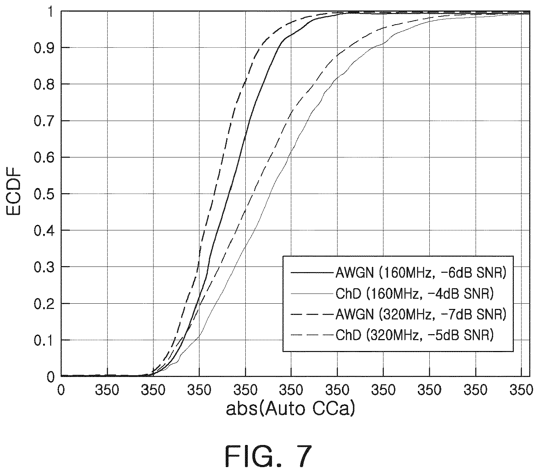

FIG. 7 is a diagram illustrating an ACF level when a training sequence of a valid frame which is not interference is received in a wireless communication device according to example embodiments.

When a training sequence of a valid frame which is not interference is received, even assuming the most extreme (or challenging) channel circumstance, the ACF value of the primary channel may be maintained at a predetermined (or alternatively, given) level or higher, as illustrated in FIG. 7. In the case of a signal present only in the auxiliary channel and a signal occupying the primary channel as above, it may be additionally determined whether the detected signal is interference or an initial signal of a valid reception frame using the ACF value distribution characteristics for each signal.

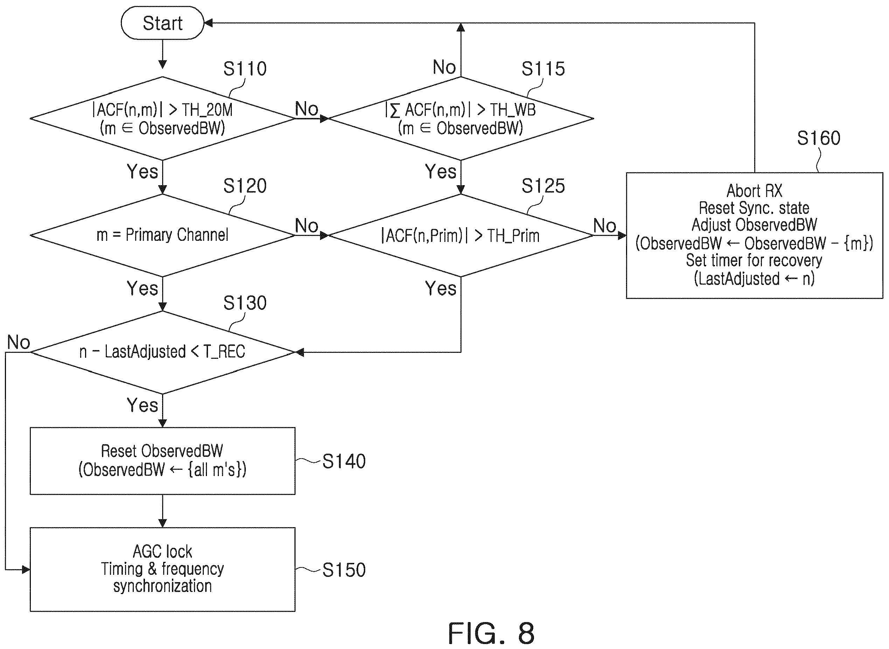

FIG. 8 is a flowchart illustrating operations of a wireless communication device according to example embodiments. Referring to FIGS. 1 to 8, the wireless communication device 200 may perform an operation for basic frame signal detection and synchronization as below.

The wireless communication device 200 may calculate and update an ACF corresponding to a training sequence for each sub-band with respect to an input signal split in units of 20 MHz sub-bands. The wireless communication device 200 may determine whether an ACF value for an arbitrary (e.g., respective) sub-band, or entire band, observed as the detection target m is greater than a first threshold TH_20M (S1 10). When the ACF value of the detection target m is not greater than the first threshold TH_20M, it may be determined whether the ACF value of the detection target m is greater than the second threshold TH_WB (S 115). According to example embodiments, operation S 115 may include determining whether a sum of ACF values over the entire band (e.g., all sub-bands) is greater than the second threshold TH_WB in response to determining in operation S 110 that the ACF value for the arbitrary sub-band is not greater than the first threshold TH_20M. When the ACF value of the detection target m is not greater than the second threshold TH WB, operation S110 may be performed.

When the value of the ACF for a sub-band, or the entirety of bands, observed as the detection target m in operation 5110 is greater than the first threshold TH_20M, it may be determined whether the detection target m is a primary channel (S120). When the detection target m is not a primary channel in operation S120 or the ACF value of the detection target m is greater than the second threshold TH_WB in operation S115, it may be considered that the initial signal of the frame is tentatively detected. In example embodiments, it is determined whether the detected signal is an interference signal of an auxiliary channel or an initial signal of a valid reception frame using ACF value distribution characteristics for each of a signal present only in an auxiliary channel and a signal occupying a primary channel.

After the initial signal detection, it may be determined whether the detected corresponding signal is a valid reception frame, not interference. The ACF value of the primary channel (primary channel) may be used as a standard to determine the valid receiving frame. That is, it may be determined whether the ACF value of the detection target m and the ACF of the primary channel are greater than a specific threshold TH_Prim (S125).

In operation S120, when the detection target m is a primary channel, or when the ACF value of the detection target m in operation S125 and the ACF of the primary channel are greater than a specific threshold TH_Prim, it may be determined whether the last adjusted timer n is less than a specific time T_REC (e.g., whether a valid signal has been detected in the primary channel within a predetermined (or alternatively, given) period of time) (S130).

When the timer n is less than the specific time T_REC, an arbitrary (or a respective) sub-band observed as the detection target m may be reset (S140). After operation S140, or operation S130 when the timer n is not smaller than the specific time T_REC, AGC setting and frequency synchronization may be performed (S150). According to example embodiments, after operation S150, the wireless communication device 200 may successfully perform synchronization (e.g., with the first AP 110), and subsequently may transmit and receive communication signals (e.g., with the first AP 110) according to the completed synchronization.

When the ACF value of the detection target m is not greater than the specific threshold TH_Prim of the primary channel, the detected signal may be an interference signal present only in the auxiliary channel (secondary channel), and the corresponding sub-band may be determined to be occupied by the interference. Accordingly, the entirety of automatic gain control (AGC) setting and synchronization processes (e.g., a process of receiving a signal of a sub-band corresponding to a training sequence) being performed for the corresponding signal may be aborted. Thereafter, for a predetermined (or alternatively, given) period of time, the operating bandwidth may be adjusted in a direction in which the corresponding sub-band is excluded from the detection target (S160). As described above, when a valid signal is detected in the primary channel within a relatively short period of time T_REC immediately (or promptly) after the operating bandwidth is adjusted, it may be recognized that the determination of interference with the excluded sub-band has been incorrect. In the subsequent initial synchronization procedure, the operating bandwidth may be restored immediately (or promptly) such that the entire channel band including the corresponding sub-band may be used.

The frame signal detection and synchronization technique of the wireless communication device 200 according to example embodiments may include distinguishing and recognizing a received signal and an interference signal for each partial frequency band when detecting and synchronizing an initial signal, and may dynamically adjust the frequency bandwidth used for initial signal detection and synchronization within the channel.

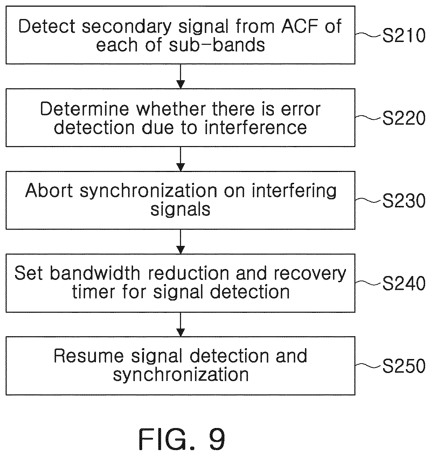

FIG. 9 is a flowchart illustrating operations of a wireless communication device 200 according to example embodiments. Referring to FIGS. 1 to 9, the wireless communication device 200 may perform signal detection and synchronization as below.

The wireless communication device 200 may split the wideband channel into 20 MHz sub-bands, and may calculate and update an auto correlation function (ACF) value with a constant delay of the received sample corresponding to the training sequence for each sub-band. Through this, when the ACF value for each sub-band or the sum (or sum) of ACF values for the entirety of sub-bands exceeds a predetermined (or alternatively, given) threshold, it may be considered that a signal is detected. In this case, when the ACF level exceeds the threshold in a band corresponding to an auxiliary channel among sub-bands, a secondary signal may be detected (S210).

In this case, the wireless communication device 200 may additionally determine whether the secondary signal is a valid reception frame including a primary channel or a false detection signal appearing due to interference (S220). When the detected secondary signal is determined to not include a primary channel and to be simply an interference signal, the corresponding secondary signal may be ignored and the AGC setting and subsequent synchronization and reception processes may be aborted (S230). Also, the corresponding sub-band may be determined to be occupied by an interference signal.

A bandwidth for detection may be excluded for a predetermined (or alternatively, given) period of time so as not to affect new frame detection and synchronization thereafter. That is, the wireless communication device 200 may determine a recovery timer for bandwidth reduction and signal detection (S240). Thereafter, the wireless communication device 200 may resume signal detection and synchronization (S250).

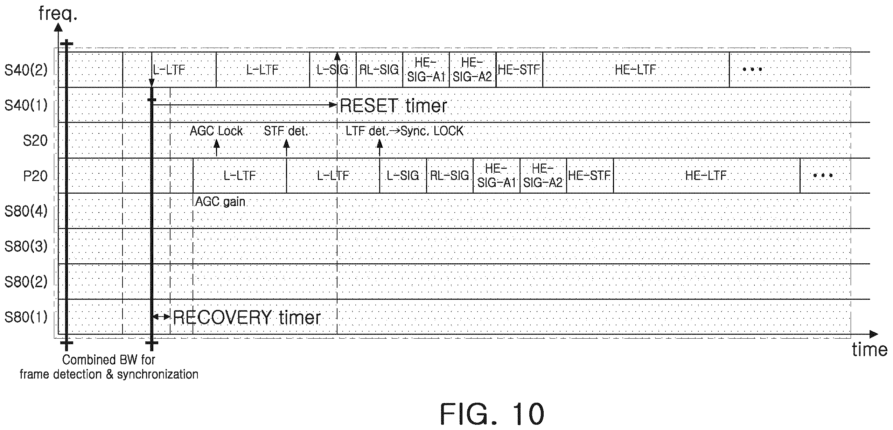

FIG. 10 is a diagram illustrating example embodiments in which a valid signal coming through a primary channel is correctly received. Referring to FIG. 10, the frame receiving technique in example embodiments may properly receive a valid signal coming into the primary channel by aborting an interference signal detected in an arbitrary auxiliary channel and dynamically adjusting a bandwidth for subsequent signal detection.

As illustrated in FIG. 10, it may be assumed that the wireless communication device 200 is in a circumstance in which the wireless communication device 200 operates in a 160 MHz broadband channel corresponding to a total of eight sub-bands. A signal may be detected in sub-band S40(2), one of the auxiliary channels, but it may be determined that the corresponding signal is an interference signal not including the primary channel P20. Therefore, synchronization and reception processes may be aborted. Thereafter, while attempting to detect a new signal is resumed, the channel bandwidth which may be the detection target may be dynamically adjusted in the direction of excluding the sub-band S40(2) occupied by the interference signal. As a result, the effect of interference may be reduced, and a frame signal received in the subsequent sub-band P20 may be correctly detected and synchronized.

Eight sub-bands are illustrated in FIG. 10, but the number of broadband sub-bands in example embodiments is not limited thereto. For example, 16 sub-bands may be present in a 320 MHz wideband channel.

The method of receiving a frame in example embodiments may include, when an interference signal is present in an auxiliary channel among sub-bands included in a wideband channel and causes a false detection in a receiving terminal, reducing the resulting damage (or harm) and adjusting the detection bandwidth such that subsequent signals are normally received. Accordingly, even when an interference signal overlaps a portion of the bandwidths of a plurality of sub-bands included in the wideband channel, proper synchronization and reception performance for a valid frame signal including a primary channel may be guaranteed (or the likelihood thereof increased).

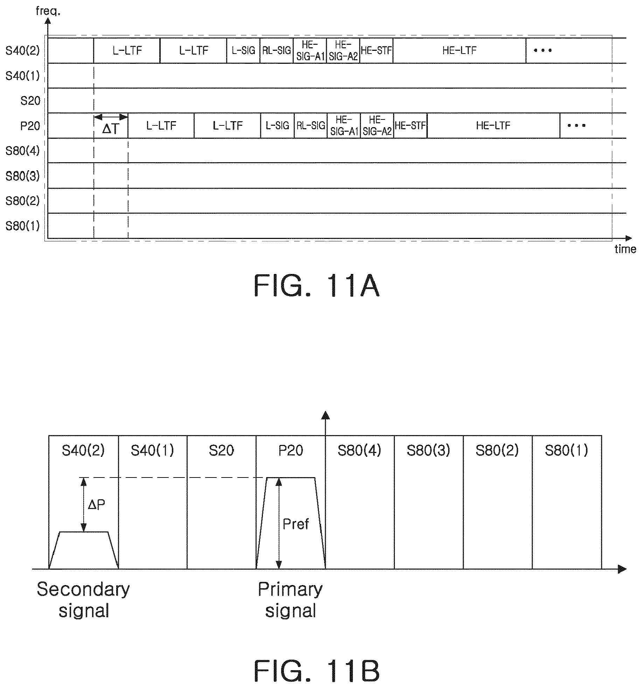

FIGS. 11A and 11B are diagrams illustrating an example in which a valid frame entering a primary channel is received in a circumstance in which an interference signal overlaps a secondary channel.

As illustrated in FIG. 11A, a valid frame coming into a primary channel may be received in a scenario circumstance in which an interference signal overlaps an auxiliary channel. As illustrated in FIG. 11B, in this scenario environment, depending on the difference in arrival time $\Delta T$ and signal strength $\Delta P$ between the interference signal (secondary signal) and the received signal (primary signal), performance damage caused by false detection of interference on the auxiliary channel may appear differently. Here, the signal strength difference $\Delta P$ may refer to a power gap between a target signal and an interference signal. The arrival time difference $\Delta T$ may refer to a timing gap between the arrival of the target signal and the interference signal.

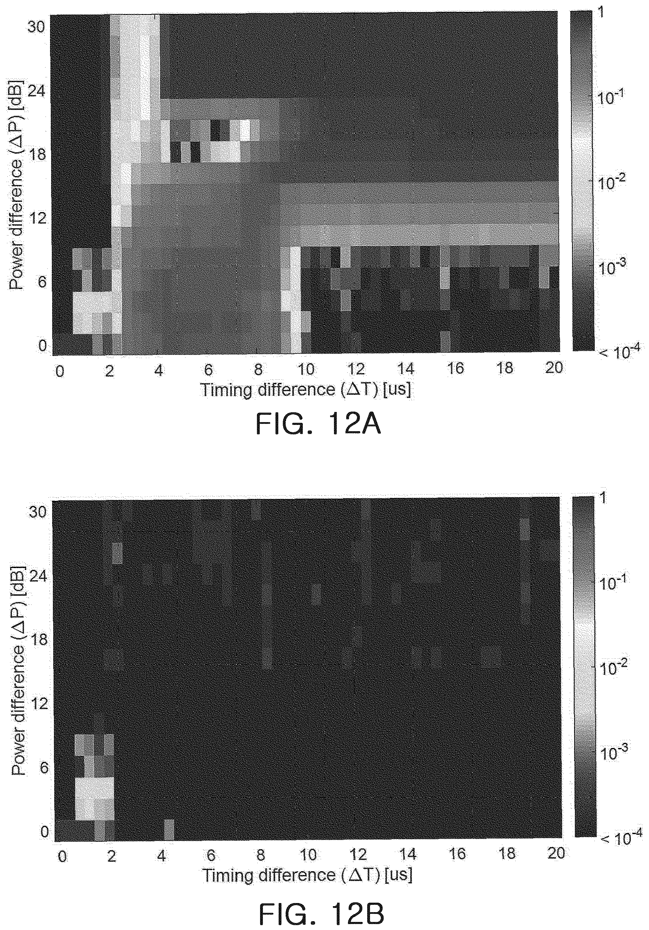

FIGS. 12A and 12B are diagrams illustrating comparison of performance in example embodiments in an additive white Gaussian noise (AWGN) channel. As illustrated in FIGS. 12A and 12B, the frame reception performance of the primary channel may be compared in terms of packet error rate (PER) according to the time difference $\Delta T$ and signal strength $\Delta P$ difference between the two signals. FIG. 12A illustrates frame reception performance of a general method, and FIG. 12B illustrates frame reception performance of example embodiments. As illustrated in FIG. 12A, as for the general method, since the gain setting and timing/frequency assimilation are performed without recognizing that the signal present in the auxiliary channel is interference, it may be difficult to properly detect and receive the valid signal of the primary channel that arrives later. As a result, it may be indicated that the reception PER deteriorates to a level close to 100%, other than in a specific ($\Delta T$, $\Delta P$) combination.

Differently from the general method, in the technique of example embodiments, the interference signal may be recognized and aborted, and frame detection and synchronization may be resumed for the remaining bandwidth other than the auxiliary channel such that the influence of the interference signal may be reduced. Accordingly, a normal reception operation for the primary channel may be performed. As a result, PER performance of less than 0.1% may be guaranteed (or likely) for most ($\Delta T$, $\Delta P$) cases.

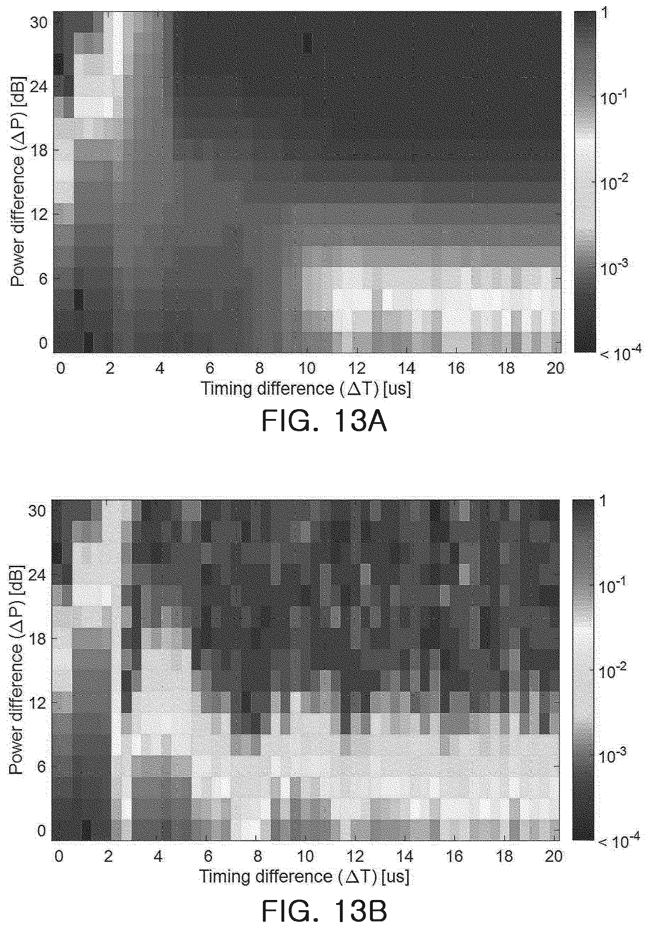

FIGS. 13A and 13B are diagrams illustrating comparison of performance between a general method and a method of example embodiments. Even in the fading channel, as illustrated in FIG. 13B, the PER performance in example embodiments may be improved compared to that of the general technique illustrated in FIG. 13A.

Even not in a circumstance in which a received signal is present in a primary channel as in this scenario, the method of receiving a frame of example embodiments may prevent (or reduce) the detailed synchronization procedure from being unnecessarily (or excessively) continued due to false detection of an interference signal in advance, which may be beneficial in reducing power consumption of the terminal.

Since the method of receiving a frame according to example embodiments includes recognizing an interference signal and dynamically reducing a bandwidth serving as a signal detection target based on the result, when a signal of a wide frequency bandwidth including both a primary channel and an auxiliary channel is received, sensitivity may rather deteriorate. Accordingly, the method of receiving a frame in example embodiments may apply a more suitable criterion for discriminating an interference signal, and when the condition is satisfied within a predetermined (or alternatively, given) period of time in preparation for the case in which a specific sub-band is excluded due to incorrect interference signal discrimination, the detection bandwidth may be increased to the entire bandwidth of the original channel. Therefore, the method of receiving a frame may reduce performance degradation due to false operation.

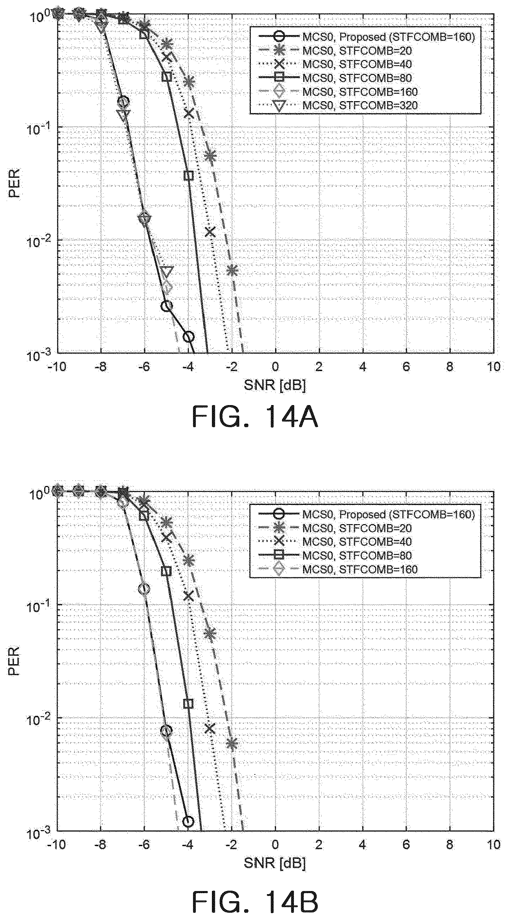

FIG. 14A is a diagram illustrating comparison of PER performance of example embodiments with respect to a received signal entirely occupying a 320 MHz wideband channel in an additive white Gaussian noise (AWGN) channel.

FIG. 14B is a diagram illustrating comparison of PER performance of example embodiments with respect to a received signal entirely occupying a 160 MHz wideband channel in an AWGN channel. As illustrated in FIGS. 14A and 14B, compared to the general method (STFCOMB = 20/40/80/160/320) of signal detection and synchronization with a fixed bandwidth, the suggested method may maintain almost the same performance as in the circumstance in which a received signal is detected over a wide bandwidth, that is, the entirety of bands, which may indicate that the method of dynamically adjusting the detection bandwidth may reduce side effects and may guarantee the same level (or a similar level) of receiver sensitivity (or improve the likelihood thereof) as compared to the general operation of detecting the entirety of bands.

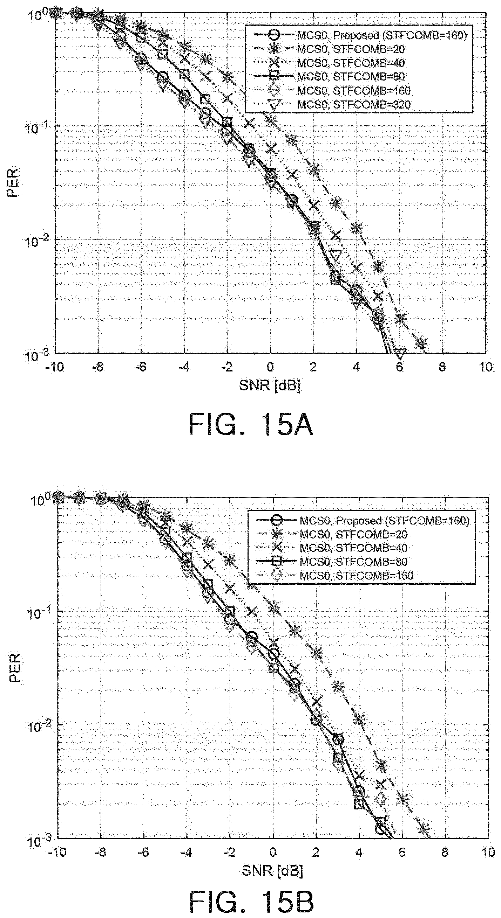

FIG. 15A is a diagram illustrating comparison of PER performance of example embodiments with respect to a received signal entirely occupying a 320 MHz wideband channel in a fading channel. FIG. 15B is a diagram illustrating comparison of PER performance of example embodiments with respect to a received signal entirely occupying a 160 MHz wideband channel in a fading channel. Referring to FIGS. 15A and 15B, as illustrated in FIGS. 14A and 14B, it may be confirmed that the suggested method may improve PER performance for a received signal occupying the entire wideband than the general methods.

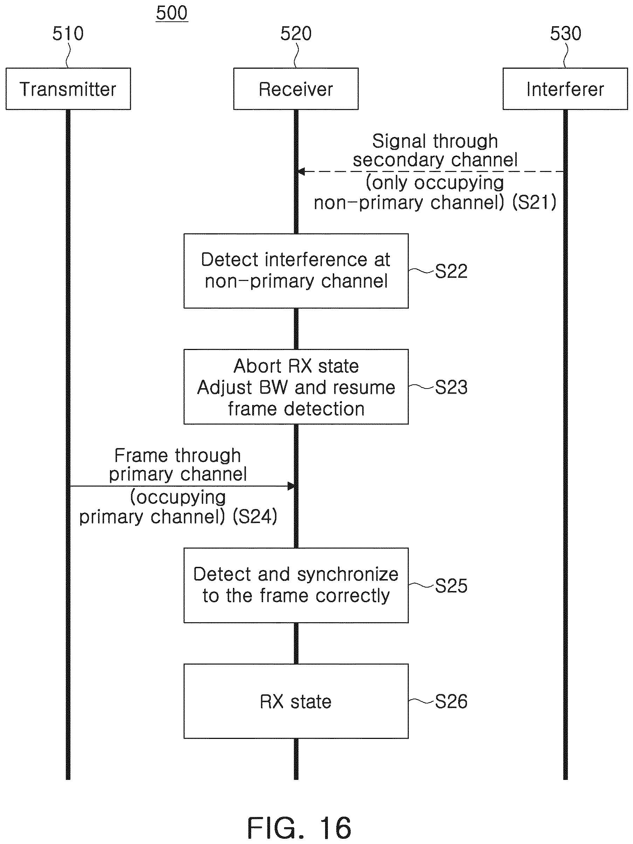

FIG. 16 is a ladder diagram illustrating operations of a wireless communication system according to example embodiments. Referring to FIG. 16, a wireless communication system 500 may include a transmitter 510 (may also be referred to herein as a transmitter device), a receiver 520 (may also be referred to herein as a receiver device), and/or an interferer 530 (may also be referred to herein as an interferer device). According to example embodiments, each of the transmitter 510, the receiver 520 and/or the interferer 530 may be one among the first AP 101, the second AP 104, the first STA 111, the second STA 112, the third STA 113 and/or a fourth STA 114.

The interferer 530 may transmit a secondary signal to the receiver 520 through an auxiliary channel not occupying the primary channel (S21). The receiver 520 may detect an interference signal in a band not occupying the primary channel (S22). The receiver 520 may prevent a corresponding synchronization procedure (or reduce the occurrence thereof) upon false detection of an interference signal in the process of receiving an input signal. Here, the input signal may be a wireless local area network (WLAN) signal, and the wireless LAN signal may include a valid signal in both a primary channel and an auxiliary channel.

Upon detection of an interference signal, the receiver 520 may execute a reception abort for a band outputting a secondary signal of the interferer 530, and may resume frame detection (S23). Thereafter, the transmitter 510 may transmit a frame to the receiver 520 through the primary channel while occupying the primary channel. The receiver 520 may detect and synchronize frames received from the transmitter 510 (S25). Thereafter, the receiver 520 may maintain a frame receiving state (S26).

Example embodiments discussed herein may be applicable to a mobile device.

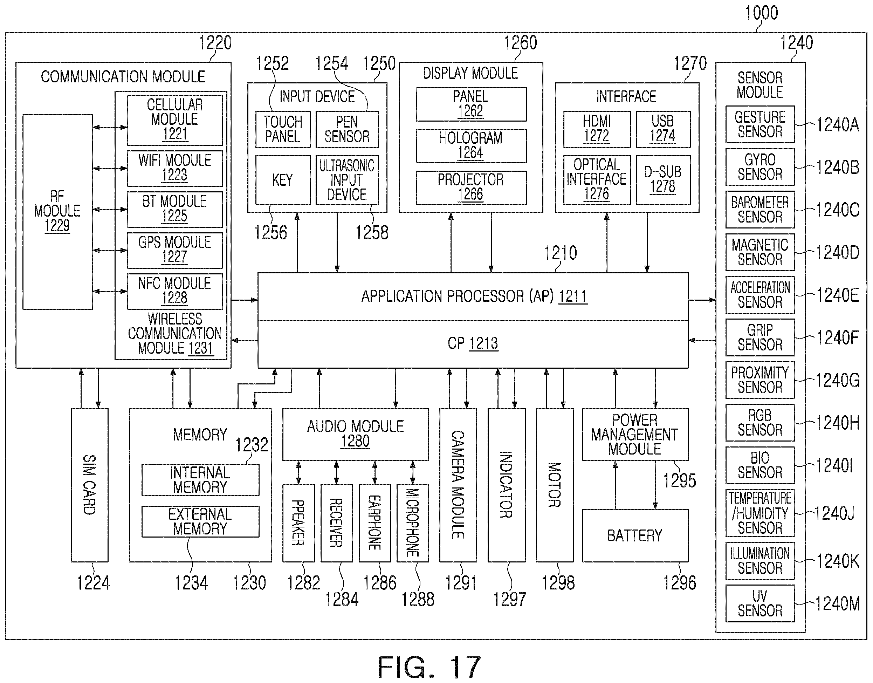

FIG. 17 is a diagram illustrating a mobile device according to example embodiments. Referring to FIG. 17, a mobile device 1000 may include at least one processor 1210, a subscriber identification module (SIM) card 1224, a memory 1230, a communication module 1220, a sensor module 1240, a user input module 1250, a display module 1260, an interface module 1270, an audio module 1280, a camera module 1291, a power management module 1295, a battery 1296, an indicator 1297 and/or a motor 1298.

The processor 1210 may include at least one application processor (AP) 1211 and/or at least one communication processor (CP) 1213. The AP 1211 and the CP 1213 may be included in the processor 1210, but the AP 1211 and the CP 1213 may be included in different IC packages. In example embodiments, the AP 1211 and CP 1213 may be included in an IC package.

The AP 1211 may control a plurality of hardware or software components connected to the AP 1211 by driving an operating system or an application program, and may process and calculate various data including multimedia data. The AP 1211 may be implemented as, for example, a system on chip (SoC). In example embodiments, the processor 1210 may further include a graphic processing unit (GPU).

The CP 1213 may perform a function of managing a data link and converting a communication protocol in communication between an electronic device including the mobile device 1000 and other electronic devices connected through a network. The CP 1213 may be implemented as a SoC, for example. In example embodiments, the CP 1213 may perform at least portion of a multimedia control function. The CP 1213 may perform identification and authentication of a terminal within a communication network using, for example, a subscriber identification module (e.g., the SIM card 1224). Also, the CP 1213 may provide services such as voice call, video call, text message, and/or packet data to a user.

Also, the CP 1213 may control data transmission and/or reception of the communication module 1220. In FIG. 17, the components such as a CP 1213, a power management module 1295, and/or a memory 1230 are illustrated as separate components from the AP 1211, but in example embodiments, the AP 1211 may be implemented to include at least a portion of the aforementioned components (e.g., the CP 1213).

In example embodiments, the AP 1211 and/or the CP 1213 may load commands and/or data received from at least one of a nonvolatile memory or other components connected thereto into a volatile memory and may process the commands and/or data. Also, the AP 1211 and/or the CP 1213 may store data received from at least one of the other components or generated by at least one of the other components in a nonvolatile memory.

The SIM card 1224 may be implemented as a card implementing a subscriber identity module, may be inserted into a slot formed at a designated position of an electronic device, or may be embedded in a device in the form of a chip, or SIM information without physical form may be stored in a portion of the device (e.g., electronic SIM, virtual SIM, or soft SIM). The SIM card 1224 may include unique identification information (e.g., integrated circuit card identifier (ICCID)) or subscriber information (e.g., international mobile subscriber identity (IMSI)). The SIM card 1224 may operate in conjunction with the communication module 1220.

The memory 1230 may include an internal memory 1232 and/or an external memory 1234. The internal memory 1232 may include at least one of, for example, a volatile memory (e.g., dynamic RAM (DRAM), static RAM (SRAM), synchronous dynamic RAM (SDRAM), or the like) or a non-volatile memory (e.g., one time programmable ROM (OTPROM), programmable ROM (PROM), erasable and programmable ROM (EPROM), electrically erasable and programmable ROM (EEPROM), mask ROM, flash ROM, NAND flash memory, NOR flash memory), or the like. In example embodiments, the internal memory 1232 may have the form of a solid state drive (SSD).

The external memory 1234 may further include a flash drive, for example, a compact flash (CF), secure digital (SD), micro secure digital (Micro-SD), mini secure digital (Mini-SD), extreme digital (xD) or memory stick.

The communication module 1220 may include a wireless communication module 1231 and/or an RF module 1229. The wireless communication module 1231 may include, for example, a cellular module 1221, a Wi-Fi module 1223, a Bluetooth (BT) module 1225, a Global Positioning System (GPS) module 1227, and/or a near-field communication (NFC) module 1228. For example, the wireless communication module 1231 may provide a wireless communication function using a radio frequency. Alternatively, the wireless communication module 1231 may include a network interface (e.g., LAN card) or modem for connecting the mobile device 1000 to a network (e.g., Internet, LAN, WAN, telecommunication network, cellular network, satellite network and/or plain old telephone service (POTS)).

The RF module 1229 may perform transmission and reception of data, for example, transmission and reception of an RF signal or a called electronic signal. Although not illustrated, the RF module 1229 may include, for example, a transceiver (transceiver), a power amp module (PAM), a frequency filter, or a low noise amplifier (LNA). Also, the RF module 1229 may further include a component for transmitting and receiving electromagnetic waves in free space in wireless communication, for example, a conductor or a wire.

The sensor module 1240 may include, for example, a gesture sensor 1240A, a gyro sensor 1240B, an air pressure sensor (e.g., barometer) 1240C, a magnetic sensor 1240D, an acceleration sensor 1240E, a grip sensor 1240F, proximity sensor 1240G, RGB (red, green, blue) sensor 1240H, bio sensor 1240I, temperature/humidity sensor 1240J, illuminance sensor 1240K and/or ultraviolet (UV) sensor 1240M. The sensor module 1240 may measure a physical quantity or may detect an operating state of an electronic device and may convert the measured or sensed information into an electrical signal. Alternatively, the sensor module 1240 may include, for example, an olfactory sensor (e-nose sensor), an electromyography sensor (EMG sensor), an electroencephalogram sensor (EEG sensor), an electrocardiogram sensor (ECG sensor), a photoplethysmography sensor (PPG sensor), a heart rate monitor (HRM sensor), a perspiration measurement sensor, and/or a fingerprint sensor. The sensor module 1240 may further include a control circuit for controlling at least one sensor included therein.

The user input module 1250 may include a touch panel 1252, a (digital) pen sensor 1254, a key 1256, and/or an ultrasonic input device 1258. The touch panel 1252 may recognize a touch input by at least one of, for example, a capacitive method, a pressure-sensitive method, an infrared method, and/or an ultrasonic method. Also, the touch panel 1252 may further include a controller. In the case of a capacitive type, direct touch and also proximity recognition may be performed. The touch panel 1252 may further include a tactile layer. In this case, the touch panel 1252 may provide a tactile response to the user.

The pen sensor 1254 may be implemented, for example, using the same or similar method as receiving a user's touch input or using a recognition sheet. As the key 1256, for example, a keypad or a touch key may be used. The ultrasonic input device 1258 may identify data by sensing sound waves with a microphone (e.g., the microphone 1288) in a terminal through a pen generating an ultrasonic signal, and may perform wireless recognition. In example embodiments, the mobile device 1000 may receive a user input from an external device (e.g., a network, a computer, or a server) connected to the mobile device 1000 using the communication module 1220.

The display module 1260 may include a panel 1262, a hologram 1264 and/or a projector 1266. The panel 1262 may be, for example, a liquid-crystal display (LCD) or an active-matrix organic light-emitting diode (AM-OLED). The panel 1262 may be implemented to be flexible, transparent, or wearable, for example. The panel 1262 and the touch panel 1252 may be configured in a (common) module. The hologram 1264 may illustrate a three-dimensional (3D) image in the air using light interference. In example embodiments, the display module 1260 may further include a control circuit for controlling the panel 1262, the hologram 1264 and/or the projector 1266.

The interface module 1270 may include, for example, a high-definition media interface (HDMI) 1272, a universal serial bus (USB) 1274, an optical interface 1276 and/or D-sub (D-subminiature) interface 1278. Alternatively or additionally, the interface 1270 may include, for example, a multi-media card (SD/MMC) or an infrastructure-red data association (IrDA).

The audio module 1280 may convert voice and electrical signals in both directions. The audio module 1280 may convert voice information input or output through, for example, a speaker 1282, a receiver 1284, an earphone 1286, and/or a microphone 1288.

The camera module 1291 may obtain images and videos, and in example embodiments, the camera module 1291 may include at least one image sensor (e.g., a front lens or a rear lens), an image signal processor (ISP), or a flash LED.

The power management module 1295 may manage power of the mobile device 1000. Although not illustrated, the power management module 1295 may include, for example, a power management integrated circuit (PMIC), a charger integrated circuit (IC), and/or a battery fuel gauge. A PMIC may be mounted, for example, in an integrated circuit or SoC semiconductor. The charging method may include wired and wireless methods. The charger IC may charge a battery and may prevent (or reduce) overvoltage or overcurrent from flowing in from the charger. In example embodiments, the charger IC may include a charger IC for at least one of a wired charging method and a wireless charging method. The wireless charging method may include, for example, a magnetic resonance method, a magnetic induction method, or an electromagnetic wave method, and an additional circuit for wireless charging, for example, a circuit such as a coil loop, a resonance circuit, or a rectifier may be added. The battery gauge may measure, for example, the remaining capacity of the battery 1296, voltage, current, or temperature during charging. The battery 1296 may generate electricity to supply power, and may be implemented as, for example, a rechargeable battery. The indicator 1297 may indicate a specified state of the mobile device 1000 or a portion thereof (e.g., the AP 1211), for example, a booting state, a message state, or a charging state. For example, a booting state, a message state, or a charging state may be displayed. The motor 1298 may convert electrical signals into mechanical vibrations. Although not illustrated, the mobile device 1000 may include a processing unit (e.g., GPU) for supporting mobile TV. A processing device for supporting mobile TV may process media data according to standards such as digital multimedia broadcasting (DMB), digital video broadcasting (DVB), or media flow, for example.

Each of the above-described components of hardware according to example embodiments may include one or more components, and the name of the corresponding component may vary depending on the type of electronic device. Hardware according to example embodiments may include at least one of the above-described components, a portion of components may not be provided or additional components may be further included. Also, a portion of hardware components according to example embodiments may be combined to form a single entity, such that the functions of the corresponding components before being combined may also be performed.

In example embodiments, the presence of a signal may be detected using ACF characteristics for an input signal obtained by splitting a wideband channel into units of 20 MHz. When a signal is detected in one of the secondary channels rather than the main 20 MHz sub-band (primary channel), it may be determined whether the corresponding signal is a false detection due to interference. If determined to be interference, the detection and synchronization of the corresponding signal may be aborted, and the reception gain setting (AGC) may be invalidated. A secondary channel under interference may dynamically adjust a target bandwidth within the channel in a direction to be excluded for a predetermined (or alternatively, given) period of time from a signal detection and synchronization operation, which may be resumed thereafter. If a signal is detected in a primary channel within a short period of time after reducing the target bandwidth, recovery may be immediately (or promptly) performed to use the entire bandwidth of the channel in a subsequent synchronization procedure. If an interference signal present only in the secondary channel is detected, the detection may be recognized, and subsequent synchronization may be aborted to swiftly return to a state in which normal signal detection and synchronization may be performed.

In example embodiments, reception gain setting and synchronization information may be invalidated due to false detection of an interference signal, and the corresponding sub-band may be excluded from operation. This may reduce the influence of interference when there is a valid reception frame including a primary channel.

By dynamically adjusting a valid reception frame with a wide bandwidth, including the primary channel, to use the entire bandwidth of the channel for synchronization, the gain on the receiver sensitivity pursued by the general method may be preserved. Unnecessary (or excessive) synchronization procedures may be prevented (or reduced) in advance in case of false detection of an interference signal, resulting in power savings for the terminal.

The entire band of the channel may be used for signal detection and synchronization, and interference in the sub-band may be recognized and false detection and unnecessary (or excessive) synchronization may be prevented (or reduced). New signal detection and synchronization may be resumed by excluding the interfering sub-band. Thereafter, by dynamically adjusting the band used for detection and synchronization for a valid frame signal, the effect of interference may be reduced, and receiver sensitivity may be preserved. The wireless communication device, wireless communication system including the same, and method of operating the same may detect and synchronize a reception frame while considering the influence of an interference signal in a wideband channel, improving receiver sensitivity and synchronization performance. False detection of an interference signal may also be reduced, resulting in power savings for the terminal.

Conventional devices and methods for performing wireless synchronization experience interference due to traffic in a channel over which the synchronization is performed. The interference causes the conventional devices and methods to falsely detect an interference signal as a signal for use in performing synchronization, and to attempt synchronization based on the interference signal, resulting in excessive resource consumption (e.g., processor, memory, power, bandwidth, RF resources, delay, etc.) and/or reduced communication performance.

However, according to example embodiments, improved devices and methods are provided for performing wireless synchronization. For example, the improved devices and methods may abort a signal reception, detection and/or synchronization process in response to determining a received signal is an interference signal. Accordingly, the improved devices and methods overcome the deficiencies of the conventional devices and methods to at least conserve resources (e.g., processor, memory, power, bandwidth, RF resources, delay, etc.) and/or improve communication performance. Also, according to example embodiments, the improved devices and methods may adjust a bandwidth for use in performing the synchronization by removing a sub-band corresponding to the interference signal for a first time period, thereby reducing resource consumption involved in further receiving the interference signal. Additionally, according to example embodiments, the improved devices and methods may recover the entire bandwidth by re-incorporating the removed sub-band in response to detecting a signal in a primary channel of the bandwidth within a second time period after the sub-channel is removed, thereby enabling the performance of synchronization with the entire bandwidth to improve communication performance.

According to example embodiments, operations described herein as being performed by the WLAN system 100, the first AP 101, the second AP 103, the network 130, the first STA 111, the second STA 112, the third STA 113, the fourth STA 114, the wireless communication device 200, the FEM 205, the RFIC 210, the baseband circuit 220, the transmit circuit 212, the receiver circuit 214, the local oscillator 216, the controller 222, the signal processing unit 225, the wireless communication device 200a, the processor 250, the transceiver 260, the wireless communication system 500, the transmitter 510, the receiver 520, the interferer 530, mobile device 1000, the at least one processor 1210, the SIM card 1224, the communication module 1220, the sensor module 1240, the user input module 1250, the display module 1260, the interface module 1270, the audio module 1280, the camera module 1291, the power management module 1295, the at least one AP 1211, the at least one CP 1213, the wireless communication module 1231, the RF module 1229, the cellular module 1221, the Wi-Fi module 1223, the BT module 1225, the GPS module 1227, and/or the NFC module 1228 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with example embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Although terms "first" or "second" may be used to explain various components, the components are not limited to these terms. These terms should be used only to distinguish one component from another component. For example, a "first" component may be referred to as a "second" component, or similarly, and the "second" component may be referred to as the "first" component. Expressions such as "at least one of" when preceding a list of elements, modify the entire list of elements and do not modify the individual elements of the list. For example, the expression, "at least one of a, b, and c," should be understood as including only a, only b, only c, both a and b, both a and c, both b and c, all of a, b, and c, or any variations of the aforementioned examples.

It will be understood that when an element is referred to as being "connected" or "coupled" to another element, it may be directly connected or coupled to the other element or intervening elements may be present. As used herein the term "and/or" includes any and all combinations of one or more of the associated listed items.

Example embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail herein. Although discussed in a particular manner, a function or operation specified in a specific block may be performed differently from the flow specified in a flowchart, flow diagram, etc. For example, functions or operations illustrated as being performed serially in two consecutive blocks may actually be performed concurrently, simultaneously, contemporaneously, or in some cases be performed in reverse order.

While example embodiments have been illustrated and described above, it will be apparent to those skilled in the art that modifications and variations could be made without departing from the scope of the present disclosure as defined by the appended claims.

**Claims**

1.  A method of operating a wireless communication device, the method comprising:

    detecting (S210) a first signal based on an auto correlation function, ACF, value of each of a plurality of sub-bands;
    determining (S220) whether the first signal is an interference signal, the interference signal not being in a primary channel;
    aborting (S230) a first synchronization for the first signal in response to determining the first signal is the interference signal;
    adjusting (S240) a bandwidth to exclude a first sub-band among the plurality of sub-bands, the first sub-band corresponding to the interference signal to obtain an adjusted bandwidth; and
    performing (S250) a second synchronization according to the adjusted bandwidth.

2.  The method of claim 1, further comprising:
    obtaining the plurality of sub-bands by band-splitting an input signal.

3.  The method of claim 2, wherein the band-splitting includes splitting the input signal into sub-bands of 20MHz.

4.  The method of claim 2 or 3, further comprising:
    obtaining the plurality of sub-bands by quantizing each of the band-split signals.

5.  The method of claim 2, further comprising:
    calculating the auto correlation function, ACF, value of each of the plurality of sub-bands after the quantizing.

6.  The method of any one of claims 1 to 5, wherein the detecting (S210) the first signal includes determining whether a received signal is present based on the auto correlation function, ACF, value of each of the plurality of sub-bands, the auto correlation function, ACF, value corresponding to,

    a respective auto correlation function, ACF, value for each sub-band among the plurality of sub-bands, or
    a sum of auto correlation function, ACF, values corresponding to an entirety of the plurality of sub-bands.

7.  The method of any one of claims 1 to 6, wherein the adjusting the bandwidth includes setting a recovery timer to a first period of time for at which to recover the first sub-band.

8.  The method of any one of claims 1 to 7, further comprising:
    setting an automatic gain control in response to determining the first signal is not the interference signal.

9.  The method of claim 8, further comprising:
    performing the first synchronization after the setting the automatic gain control.

10. The method of any one of claims 1 to 9, further comprising:
    recovering the first sub-band to use an entirety of the bandwidth in performing a third synchronization in response to detecting a second signal in the primary channel within a second period of time after the adjusting the bandwidth.

11. A method of operating a wireless communication device, the method comprising:

    determining (S110) whether a first auto correlation function, ACF, value corresponding to a first training sequence for an input signal is greater than a first threshold;

determining (S115) whether a sum of ACF values is greater than a second threshold in response to determining that the first ACF value is not greater than the first threshold, the ACF values respectively corresponding to a plurality of training sequences for the input signal, and the first training sequence being included among the plurality of training sequences;

determining (S120) whether a detection signal is a signal of a primary channel in response to determining the first ACF value is greater than the first threshold;

determining (S125) whether an ACF value of the primary channel is greater than a third threshold in response to determining,

the detection signal is not the signal of the primary channel, or
the sum of the ACF values is greater than the second threshold; and

aborting (S160) a process of receiving a signal of a sub-band corresponding to the first training sequence when the ACF value of the primary channel is not greater than the third threshold.

12. The method of claim 11, further comprising:
determining whether a valid signal is detected in the primary channel within a period of time in response to determining,

the detection signal is the signal of the primary channel, or
the ACF value of the primary channel is greater than the third threshold.

13. The method of claim 12, wherein

the aborting (S160) includes adjusting a bandwidth to exclude the sub-band corresponding to the first training sequence; and
the method further comprises recovering the bandwidth for signal detection in response to determining the valid signal is detected in the primary channel within the period of time.

14. The method of claim 13, further comprising:
setting automatic gain control and performing synchronization in response to determining the valid signal is detected in the primary channel within the period of time.

15. The method of claim 14, further comprising:
determining whether the detection signal is an interference signal of an auxiliary channel or an initial signal of a valid reception frame based on ACF value distribution characteristics for each of a first signal present only in an auxiliary channel and a second signal occupying the primary channel.

FIG. 1

200

210                                          220

212                          222              224

TX
CIRCUIT              CONTROLLER        STORAGE

201          205

214

FEM                  RX
CIRCUIT

216                          225

LOCAL
OSCILATOR            SIGNAL
PROCESSOR

RFIC                 BASEBAND CIRCUIT

FIG. 2

200a

280

250                  260

PROCESSOR            TRANSCEIVER

270

MEMORY

FIG. 3

INPUT
SIGNAL

BAND-SPLIT INTO
20MHz SUB-BANDS — S10

QUANTIZATION — S20

AUTO-CORRELATION FUNCTION
(ACF) — S30

INITIAL STF DETECTION
(PER-20MHz / COMBINED) — S40

INTERFERENCE
DETECTION (COMPARED
BETWEEN PRIMARY AND
SECONDARY)? — S50

NO

YES

S65 — AGC LOCKING

ABORT RX
RESET SYNC. STATE
ADJUST OBSERVED BW — S60

S70 — TIMING & FREQUENCY
SYNCHRONIZATION

FIG. 4

FIG. 5

FIG. 6

FIG. 7

FIG. 8

```
┌─────────────────────────────────────┐
│   Detect secondary signal from ACF of │──── S210
│          each of sub-bands            │
└─────────────────────────────────────┘
                  │
                  ▼
┌─────────────────────────────────────┐
│     Determine whether there is error  │──── S220
│       detection due to interference   │
└─────────────────────────────────────┘
                  │
                  ▼
┌─────────────────────────────────────┐
│    Abort synchronization on interfering│──── S230
│                signals                │
└─────────────────────────────────────┘
                  │
                  ▼
┌─────────────────────────────────────┐
│   Set bandwidth reduction and recovery│──── S240
│         timer for signal detection    │
└─────────────────────────────────────┘
                  │
                  ▼
┌─────────────────────────────────────┐
│       Resume signal detection and     │──── S250
│             synchronization           │
└─────────────────────────────────────┘
```

FIG. 9

FIG. 10

FIG. 11A

FIG. 11B

FIG. 12A

FIG. 12B

FIG. 13A

FIG. 13B

FIG. 14A

FIG. 14B

FIG. 15A

FIG. 15B

500

510 520 530

| Transmitter | Receiver | Interferer |

Signal through
secondary channel
(only occupying
non-primary channel) (S21)

| Detect interference at
non-primary channel | ~S22 |

| Abort RX state
Adjust BW and resume
frame detection | ~S23 |

Frame through
primary channel
(occupying
primary channel) (S24)

| Detect and synchronize
to the frame correctly | ~S25 |

| RX state | ~S26 |

# FIG. 16

FIG. 17

1000

**SENSOR MODULE 1240**
- GESTURE SENSOR 1240A
- GYRO SENSOR 1240B
- BAROMETER SENSOR 1240C
- MAGNETIC SENSOR 1240D
- ACCELERATION SENSOR 1240E
- GRIP SENSOR 1240F
- PROXIMITY SENSOR 1240G
- RGB SENSOR 1240H
- BIO SENSOR 1240I
- TEMPERATURE /HUMIDITY SENSOR 1240J
- ILLUMINATION SENSOR 1240K
- UV SENSOR 1240M

**INTERFACE 1270**
- HDMI 1272
- USB 1274
- OPTICAL INTERFACE 1276
- D-SUB 1278

**DISPLAY MODULE 1260**
- PANEL 1262
- HOLOGRAM 1264
- PROJECTOR 1266

**INPUT DEVICE 1250**
- TOUCH PANEL 1252
- PEN SENSOR 1254
- KEY 1256
- ULTRASONIC INPUT DEVICE 1258

**COMMUNICATION MODULE 1220**
- CELLULAR MODULE 1221
- WIFI MODULE 1223
- BT MODULE 1225
- GPS MODULE 1227
- NFC MODULE 1228
- WIRELESS COMMUNICATION MODULE 1231
- RF MODULE 1229

1210
APPLICATION PROCESSOR (AP) 1211
CP 1213

POWER MANAGEMENT MODULE 1295
BATTERY 1296
MOTOR 1298
INDICATOR 1297
CAMERA MODULE 1291

**AUDIO MODULE 1280**
- MICROPHONE 1288
- EARPHONE 1286
- RECEIVER 1284
- PPEAKER 1282

**MEMORY 1230**
- MEMORY 1232
- INTERNAL MEMORY
- EXTERNAL MEMORY 1234

SIM CARD 1224